# EUROPEAN PATENT SPECIFICATION

(11) **EP 4 028 195 B1**
(45) Date of publication and mention of the grant of the patent: **12.02.2025**
(21) Application number: 20765289.2
(22) Date of filing: 04.09.2020
(51) Int. Cl.: B23K 11/31

(54) **WELDING APPARATUS**
SCHWEISSVORRICHTUNG
APPAREIL DE SOUDAGE

(30) Priority: 10.09.2019 IT 201900015947
(43) Date of publication of application: 20.07.2022
(73) Proprietor: Tecna S.p.A., 40024 Castel San Pietro Terme (IT)
(72) Inventor: BERGAMI, Damiano, 40023 CASTEL GUELFO DI BOLOGNA (IT)
(74) Representative: Modiano, Micaela Nadia
(86) International application number: PCT/EP2020/074872
(87) International publication number: WO 2021/048032

(56) References cited:
- WO-A1-2020/110158
- SE-C1- 150 180
- US-A- 5 239 155
- US-B1- 6 624 378

## Description

The present invention relates to a welding apparatus.

As is known, resistance welding methods provide for heating one or more materials to be welded by electrical resistance.

In order to perform these methods, apparatuses provided with a gun are widespread, the arms of which are provided at their ends with respective electrodes, which can be kept pressed against the parts to be mutually welded (which in turn are in contact) while electric current flows through them. Thus, the heat dissipation that is generated can melt the parts locally, causing their mutual welding.

These apparatuses are used extensively in many fields of application, which certainly include the automotive industry: in workshops as well as in manufacturing and assembly factories, the methods outlined above are used to weld metal plates and other parts of the body of the vehicles.

In greater detail, known apparatuses normally provide for a main body in which a shell provided with grips encloses and protects the components that perform the operation. The space occupation and the geometry of the arms, which extend from the shell, and of the electrodes are studied so that they are compatible with the shape of the vehicle bodies and of the typical areas of intervention on the vehicle, considering that the parts to be welded must be placed necessarily within the space of a few centimeters (or millimeters) that is comprised between the two electrodes.

Nevertheless, sometimes it is impossible to reach certain points of the vehicle body, due to the physical hindrance constituted by the adjacent structures; therefore, being aware of this problem, manufacturers equip the apparatuses with devices for the temporary release of one of the arms. By acting on said devices, the user moves an appropriately shaped stop element, which is normally arranged so as to interfere with the rotation of one of the arms, in order to move it and thus be able to space the electrodes temporarily. This indeed allows to position the apparatus in the desired manner for welding (which is started only after moving the electrodes closer again and after reactivating the lock).

The above described release devices must be designed so as to avoid the possibility of accidental activation: for this purpose, the welding apparatus is provided with an Allen wrench, which can engage a seat provided on the stop element (or on an element that is integral therewith). Thus, the user can release the arm only by resorting to the wrench, which causes the rotation of the stop element from the interference position to the position that allows the movement of the arm.

However, this constructive solution is not free from drawbacks.

The Allen wrench is a tool that is separate from the apparatus and which the user must in any case have available at the desired time.

However, it should be noted that the need to release an arm occurs in line, during the execution of a welding operation, which often forces the user to move slowly along the vehicle body, following the imaginary welding line that is to be provided (and which can indeed affect an otherwise inaccessible area). In this context, the user must have taken care to bring the wrench with him or must have placed it in the immediate vicinity, in order to avoid having to interrupt the welding operations and move away from the station in order to retrieve the wrench (generating unwanted stops and negatively affecting productivity).

Often, however, it is difficult to comply with these cautions in normal production activity, which is increasingly characterized by hectic rhythms and sometimes by chaotic and untidy workplaces.

Moreover, even if the user has been so diligent as to keep the wrench immediately available to him, the release of the arm in any case forces a pause, in order to put down the apparatus, retrieve the wrench from the pockets or from an adjacent cabinet and then grip it. This is in any case an unwanted pause, which interrupts the continuity of the welding operations.

The need has thus become apparent to rely on a device which, while avoiding the danger of an accidental activation thereof, does not require external equipment or tools for its actuation, since the need to have them constantly available during welding activities causes inconvenience and slowing in the production cycle. A welding apparatus in accordance with the preamble of claim 1 is disclosed in document US6624378.

The aim of the present invention is to solve the problems described above, by providing a welding apparatus that offers methods for the temporary release of one of its arms which are practical and at the same time safe.

Within this aim, an object of the invention is to provide a welding apparatus in which one of the arms can be released temporarily only under the action of the user but without resorting to external tools.

Another object of the invention is to provide a welding apparatus that allows an operator to release rapidly one of its arms, at the same time adopting effective measures against accidental release.

Another object of the invention is to provide a welding apparatus that ensures high reliability in operation and is provided with a release device that has a small space occupation, such that it is does not cause hindrance during welding operations.

Another object of the invention is to provide a welding apparatus having a technical and structural architecture that is alternative to those of apparatuses of the known type.

Another object of the invention is to provide a welding apparatus that can be obtained easily starting from commonly commercially available elements and materials.

Another object of the invention is to provide a welding apparatus that has low costs and is safe in application.

This aim and these and other objects which will become better apparent hereinafter are achieved by a welding apparatus according to claim 1.

Further characteristics and advantages of the invention will become better apparent from the description of a preferred but not exclusive embodiment of the welding apparatus according to the invention, illustrated by way of non-limiting example in the accompanying drawings, wherein:
Figure 1 is a front elevation view of the welding apparatus according to the invention, with the supporting arm locked;
Figure 2 is a top view of the apparatus of Figure 1;
Figure 3 is a sectional view of Figure 2, taken along the line III-III, and shows the body in the first angular position;
Figure 4 is a partially exploded perspective view of the temporary release device;
Figure 5 is a lateral elevation view of the device of Figure 4 with the lever in the first configuration;
Figure 6 is a sectional view of Figure 5, taken along the line VI-VI;
Figure 7 is a sectional view of Figure 5, taken along the line VII-VII;
Figure 8 is substantially a front elevation view of the welding apparatus of Figure 1, with the supporting arm temporarily released;
Figure 9 is substantially a top view of the apparatus of Figure 8;
Figure 10 is a sectional view of Figure 9, taken along the line X-X, and shows the body in the second angular position;
Figure 11 is a front elevation view of the device of Figure 4, with the lever in the second configuration;
Figure 12 is a sectional view of Figure 11, taken along the line XII-XII.

With reference to the figures, the reference numeral 1 generally designates a welding apparatus, which comprises a main unit 2 which supports, optionally indirectly, a first electrode 3a and a second electrode 3b. The electrodes 3a, 3b can be crossed by an electric current in order to perform welding treatments (typically but not exclusively of the resistance type), to which parts previously placed between said electrodes 3a, 3b are thus subjected. The methods with which the electrodes 3a, 3b and in general the apparatus 1 perform welding are per se known and therefore will not be dwelt upon further in the present description. It should be noted in any case that typically apparatus 1 is of the (at least partially) portable type, with the unit 2 which can be gripped by a user, for example by virtue of grip handles 4 which extend from the external shell 5 of the unit 2. This allows the user to move the apparatus 1 freely within a work station. Usually, in this field the unit 2 is connected by means of cables to a carriage or to a fixed installation for the power supply and the management of the operation of the unit 2 and of the components inside it (enclosed by the shell 5).

In the preferred application, which is mentioned merely by way of non-limiting example, the apparatus 1 is designed to weld parts (metal sheets, for example) of bodies of cars and vehicles in general, both for production/assembly and for repair. In this context, the user can progressively move the unit 2 along the areas of the body to be welded, keeping them between the electrodes 3a, 3b, and thus provide the desired weld.

It is specified and it is stated once again, in any case, that the field of application of the invention (and the protection claimed herein) extends to welding (resistance welding and not only) of other parts, products or intermediate components, and likewise it is not excluded to use the solutions described hereinafter on apparatuses 1 that are fixed or in any case of another type.

A device 6 for the temporary release of a supporting arm 7 of the first electrode 3a is associated with the unit 2 (the arm 7 is part of the unit 2 or extends from it); this device 6 can be activated selectively in order to allow temporarily the movement of said supporting arm 7.

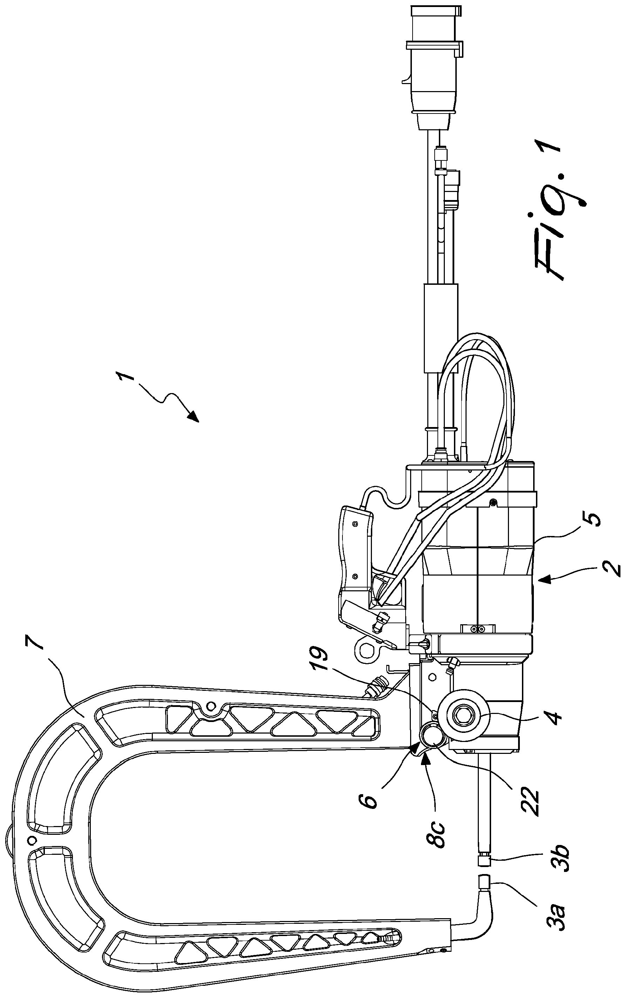

Typically, in fact, the electrodes 3a, 3b are kept motionless at a fixed mutual distance (as in the situation of Figure 1), to allow indeed the correct execution of the weld. However, sometimes indeed the arrangement and the space occupation of the electrodes 3a, 3b and of the respective supporting elements (in particular the arm 7), as well as those of the parts and/or pieces to be welded, do not allow a correct positioning of the latter between the electrodes 3a, 3b.

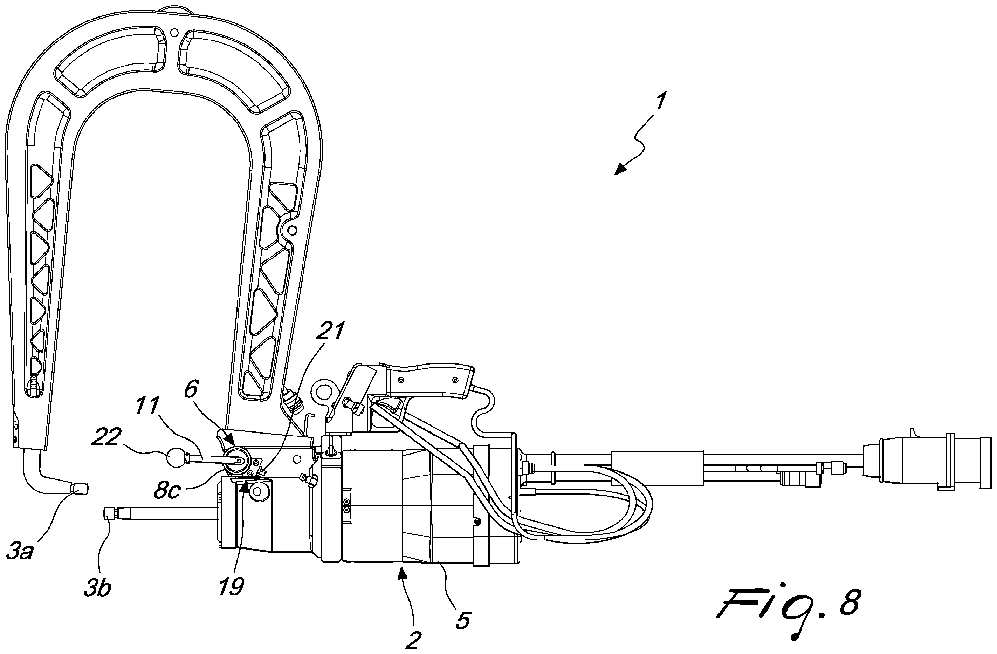

The device 6 instead allows a temporary release of the supporting arm 7 and therefore allows the first electrode 3a to be distanced, even by just a few centimeters, from the other (for example providing the situation of Figure 8), ensuring an easier arrangement of the parts to be welded between said electrodes 3a, 3b.

It is specified that the manners in which the second electrode 3b is supported by the unit 2 (directly or indirectly, with or without an additional arm) may be any, and the manners in which each electrode 3a, 3b is kept pressed onto the parts also may be any.

Furthermore, it is specified that the distinction between "first electrode" 3a and "second electrode" 3b is made only for the sake of clarity in identification within the present description, and it is to be understood simply that the "first" electrode 3a is the one supported by the arm 7 directly affected by the action of the device 6.

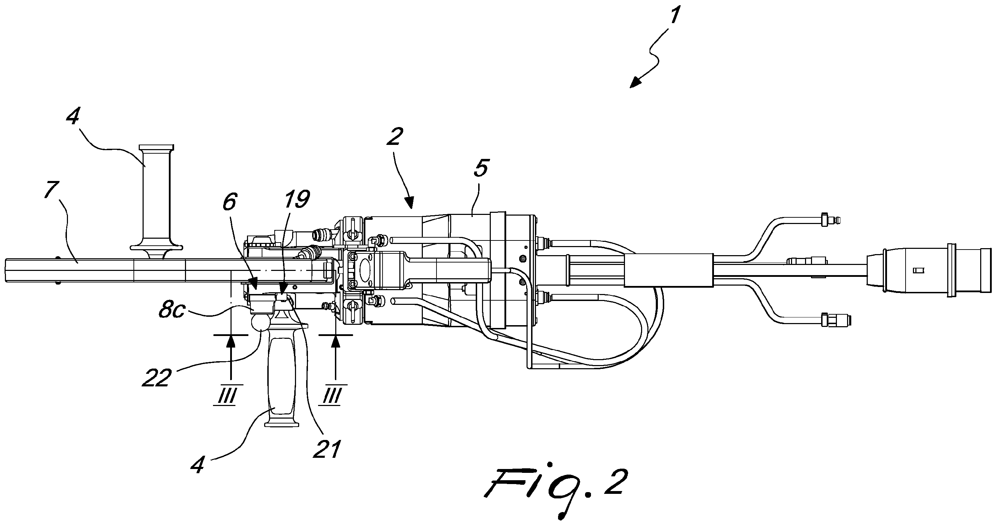

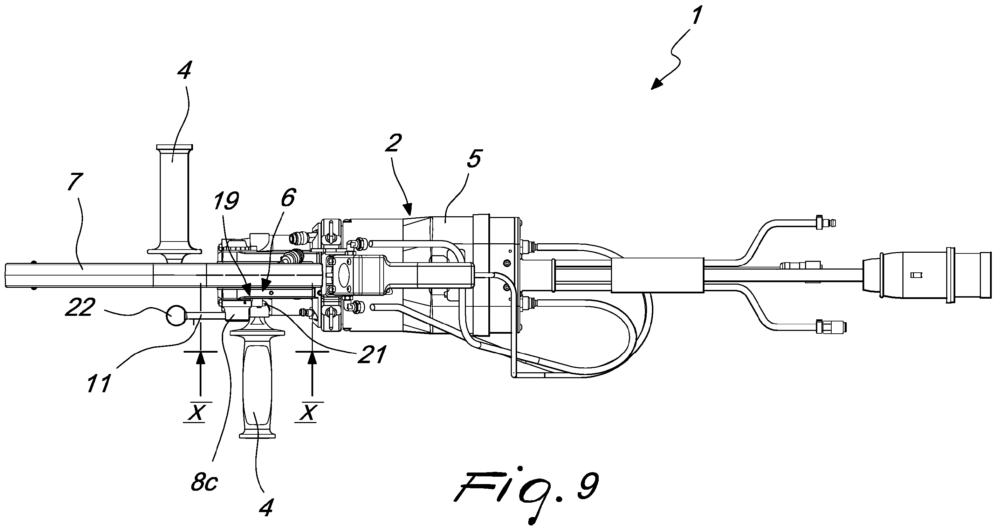

According to the invention, the device 6 comprises a hollow axially symmetrical body 8, which is supported by the unit 2 with the possibility of axial rotation at least between a first angular position (in which it is arranged in Figures 1-3) and a second angular position (Figures 8-10).

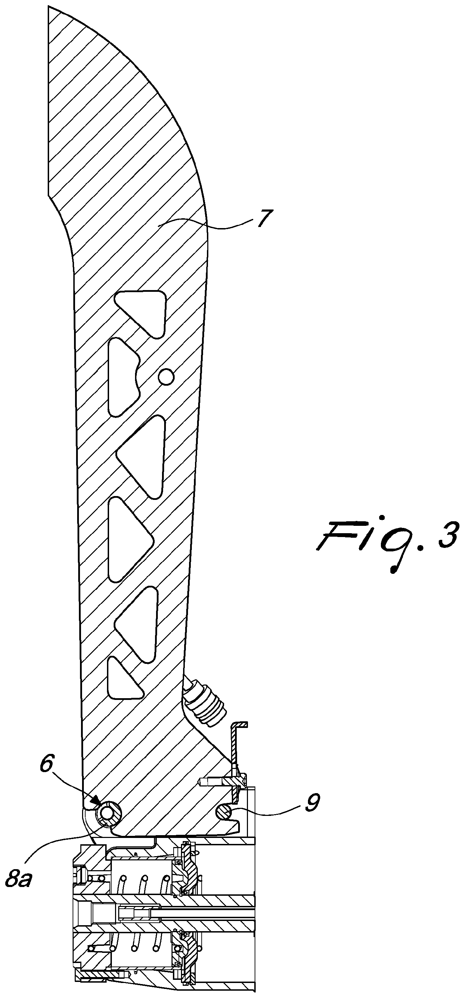

In the first angular position, at least one axial portion 8a thereof (preferably an intermediate one, and even more preferably one that is equidistant from the ends) is arranged so as to interfere with the rotation of the arm 7. In practice, the axial portion 8a corresponds to the segment of the body 8 that is longitudinally aligned with the arm 7. The first angular position is clearly shown in Figure 3, in which it can be noted indeed that the body 8 contrasts with its portion 8a (in cross-section in Figure 3) the rotation of the arm 7, which would otherwise occur about a pivot 9.

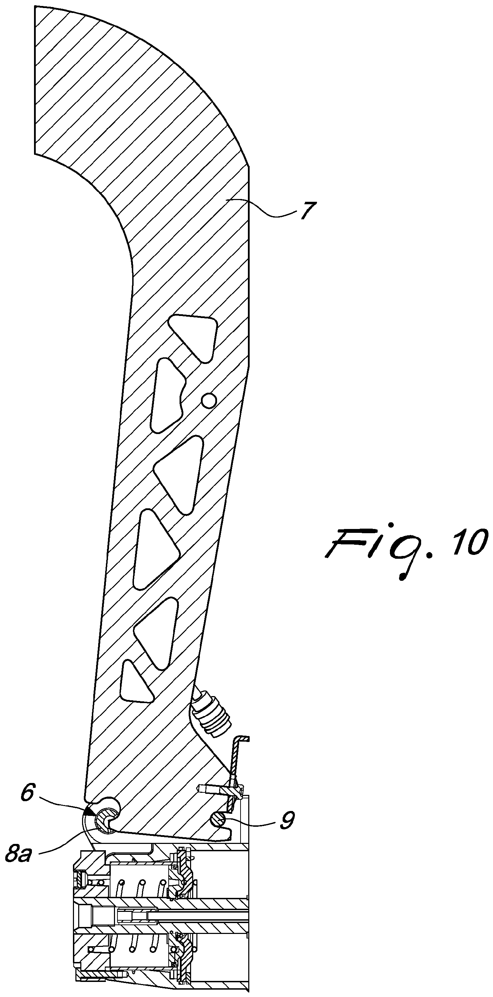

In the second angular position, instead, which is obtained by rotating the body 8 about its own longitudinal axis starting from the first angular position, a window 10 provided along the lateral surface of the portion 8a is arranged along the rotational trajectory of the arm 7 (about the pivot 9), in order to allow the movement of the latter. As can be deduced from Figure 10, which indeed shows the body 8 in the second angular position, in this situation the arm 7 does not encounter the immediate contrast of the lateral surface of the body 8 (of the portion 8a), but encounters the window 10, which allows a rotation of at least a few degrees (but it can also be much broader, as a function of the specific requirements and of the size of the components involved). The rotation, even just by a few degrees, is in any case sufficient to mutually space the electrodes 3a, 3b and achieve the desired aim.

Furthermore, the device 6 comprises a lever 11 for the actuation of the body 8, which can slide (preferably maintaining the possibility of independent rotation about its own longitudinal axis) at least between a first configuration and a second configuration.

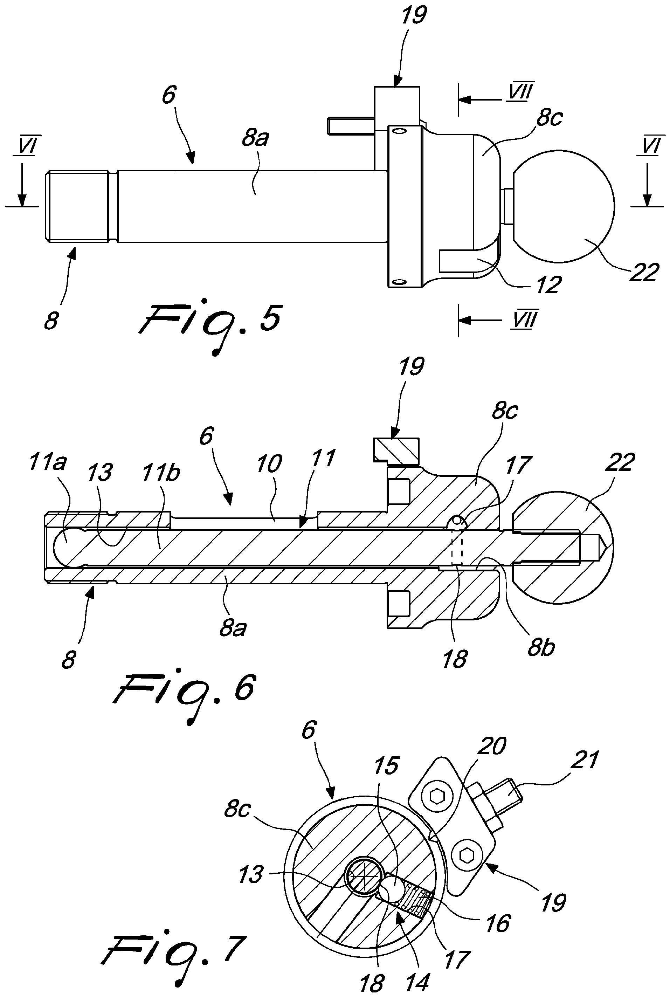

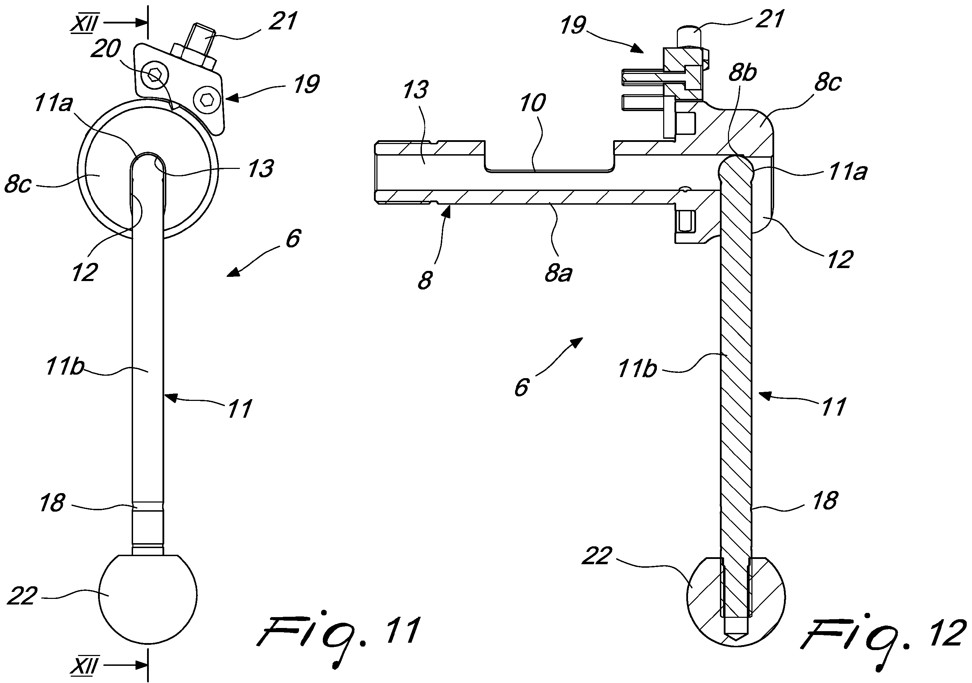

In the first configuration (for example shown clearly in Figure 6), the lever 11 is accommodated (substantially completely) in a parallel manner in the body 8. In the second configuration, instead (Figure 12, for example), the lever 11 protrudes from the body 8 (substantially completely) and a terminal portion 11a of the latter is retained so that it can rotate by said body 8. Thus, when the lever 11 is in the second configuration, a user can move it (rotate it) more or less freely with respect to the body 8, keeping in any case the coupling to the latter with the terminal portion 11a.

The body 8 is provided with a seat 12 which is configured for interlocking coupling with the lever 11 when the latter is arranged in the second configuration and is rotated, about the terminal portion 11a and with respect to the condition of parallel arrangement with the body 8, up to a predefined arrangement (in which the lever 11 is shown in Figures 11-12). In other words, the interlocking coupling is activated (automatically) only when, after moving the lever 11 into the second configuration, said lever is rotated appropriately up to a predefined arrangement (described further in later paragraphs). By virtue of the interlocking coupling between the body 8 (seat 12) and the lever 11 (and of the temporarily rigid coupling thus obtained), it is therefore possible to actuate the rotation of the body 8 between said angular positions simply by moving (gripping and rotating) the lever 11. This allows to move the body 8 into the second angular position and to achieve the release of the arm 7 exclusively by virtue of the lever 11 and without using external tools or equipment, thus achieving the intended aim.

Moreover, it should be noted that in the second configuration, since the lever 11 is substantially completely extracted from the body 8, the axial portion 8a is in fact in practice emptied (Figure 12) and therefore the window 10 faces an empty region of space (in order to further increase the space available to the arm 7 for rotating).

It should also be specified that once release has occurred, the apparatus 1 can be provided with solutions that allow the user to achieve the complete (temporary) disengagement of the arm 7 from the unit 2 (for example by offering the possibility to extract the arm 7 from the pivot 9, after rotating it about the latter), where advisable due to the circumstances and requirements.

In particular, in the preferred embodiment, illustrated in the accompanying figures by way of non-limiting example of the application of the invention, the seat 12 is formed at a protruding top of the body 8, which is directed outward, and is constituted by a radial groove the width of which substantially corresponds to the diameter of the lever 11 (of its transverse cross-section).

Thus, the body 8 couples by interlocking with the lever 11 when the latter, in addition to being arranged in the second axial configuration (in which it is extracted from the body 8), is rotated until it is in the predefined arrangement, which in this preferred embodiment corresponds to a condition of perpendicular arrangement between the lever 11 and the body 8 (as can be seen in Figure 12). It is specified in any case that the choice of obtaining interlocking at a perpendicular orientation of the lever 11 with respect to the body 8 is a preferred but not exclusive choice within the scope of the application of the invention: in general, in fact, the coupling is obtained following a rotation of the lever 11 about the terminal portion 11a by a predefined angle of any value (and therefore not necessarily 90°).

With further reference to the preferred constructive solution, shown in the accompanying figures by way of non-limiting example of the field of the application of the invention, the lever 11 comprises a substantially cylindrical main stem 11b, which supports at one of its ends the terminal portion 11a. The terminal portion 11a is shaped like a sphere that is larger in diameter than the transverse cross-section of the stem 11b and the diameter of an opening 8b, which is provided along the body 8 and is crossed by the lever 11 in its sliding between said configurations. By virtue of the dimensional choices introduced earlier, during sliding the opening 8b does not hinder the exit of the stem 11b from the body 8 but retains its terminal portion 11a: the sliding stroke of the lever 11 ends automatically when the terminal portion 11a rests against the edge of the opening 8b (which has a shorter extension).

More particularly, the body 8 is substantially shaped like a right circular cylinder (along which therefore the portion 8a is formed), which has an expanded head 8c, at a protruding top thereof (the one in which the seat 12 is formed). Furthermore, the window 10 is ideally delimited by two generatrices of the cylinder and by two longitudinally aligned arcs (which lie on planes that are perpendicular to the axis of the cylinder), chosen with a breadth preferably less than 180°. In particular, the breadth of the arcs (and therefore the width - transverse dimension - of the window 10) can be chosen freely as a function of the mechanical strength that one wishes to give to the portion 8a and/or of the space that one wishes to leave for the rotation of the arm 7.

Conveniently, in the first configuration the lever 11 is accommodated so that it can slide (and preferably also rotate) in a longitudinal duct 13 (which the opening 8b faces) provided inside the body 8. Such duct 13 can be chosen coaxial or eccentric with respect to said body 8. The second option introduced above is of considerable practical interest: in fact, in this manner the cross-section of the body 8 (of the axial portion 8a) designed to contrast the rotation of the arm 7 in the first angular position is larger (with respect to the choice of providing the duct 13 coaxially to the body 8), with benefits in terms of strength and mechanical rigidity and therefore in terms of safety and reliability of the apparatus according to the invention.

Advantageously, the apparatus 1 according to the invention comprises means 14 for contrasting the accidental movement of the lever 11, in order to maintain the first configuration and/or the second configuration (and preferably each of them) until the direct intervention of a user occurs.

In particular, in the preferred embodiment, which in any case does not limit the application of the invention, such means 14 comprise a presser element 15, which is preferably spherical (but might also have another shape), and a spring 16. The presser element 15 and the spring 16 are accommodated in a radial channel 17 (as clearly visible for example in Figure 7), which is provided in the body 8 and faces the duct 13. In the first configuration and/or in the second configuration (preferably in both), the presser element 15 is kept elastically pressed against the lever 11 by the constraining reaction of the spring 16, so as to indeed contrast, at least by friction, the accidental movement (sliding) of the lever 11.

Even more particularly, the lever 11 has, along its lateral surface, a circumferential groove 18, which (by virtue of an appropriate size choice) is aligned with the channel 17 when the lever 11 is in the first configuration (Figures 6-7): therefore, in this first configuration the presser element 15 is indeed pressed against the groove 18 and contrast to the accidental movement of the lever 11 occurs not only by friction but also by mechanical interference (indeed by virtue of the presser element 15, which is partially accommodated in the groove 18).

The spring 16 is chosen such as to generate a constraining reaction that is deemed adequate to contrast sliding more or less firmly (by mechanical interference or by friction, as shown), but this reaction may of course be overcome by the voluntary action of the user when he/she grips the lever 11 to extract it from the body 8 or when he/she pushes it inside it again.

Conveniently, the apparatus 1 comprises a signaling device 19, which is activated automatically during the rotation of the body 8 (about its own longitudinal axis) with respect to the main unit 2, upon reaching the second angular position.

It should be noted in this regard that as a function of the breadth of the window 10 and in general of the geometric and shape parameters involved, it might be possible to achieve the release of the arm 7 at additional angular positions of the body 8 with respect to the designated second angular position. At the same time, however, in such additional angular positions for the arm 7 a very limited rotation stroke might be allowed indeed due to the lack of optimum positioning of the window 10 with respect to the arm 7.

Noting furthermore that it might be difficult to identify the moment when the body 8 reaches the second angular position, the device 19 facilitates the work for the user in this regard, since upon reaching the second angular position it emits a signal (optical, acoustic or of any another type), overcoming the possible drawback noted above.

In particular, in the embodiment proposed in the accompanying figures by way of non-limiting example of the application of the invention, the device 19 comprises a sensor which is anchored to the unit 2 and is configured to detect its own alignment with a notch 20 (of any size and shape) arranged along the lateral surface of the body 8 (and preferably along the head 8c). By virtue of an appropriate arrangement of the notch 20 on the body 8 (in particular with respect to the window 10), the condition of alignment between the notch 20 and the sensor is chosen so as to correspond to the reaching of the second angular position by the body 8 (which is thus detected indirectly by said sensor). The information thus obtained can be transmitted to the user with a signal of any type, as a function of the specific requirements.

More particularly, the sensor comprises a spring-loaded lance 21 (see for example Figures 1 and 8), which is normally kept pressed elastically against the lateral surface of the body 8 (and preferably of the head 8c). The lance 21 can move automatically upon the alignment (of said sensor) with the notch 20 (since it enters the latter at least partially).

The user can thus recognize the desired reaching of the second angular position by noticing a small snap action of the lance 21 (and/or by hearing the associated sound).

In order to increase the practicality of use of the apparatus 1 according to the invention, the lever 11 is advantageously provided with a grip knob 22, which is mounted on the opposite side with respect to the terminal portion 11a. The knob 22 (typically but not exclusively spherical) thus forms a facilitated grip at least for the movement of the lever 11 between the first configuration and the second configuration and for the rotation of the lever 11 (in the second configuration) aimed at achieving the predefined arrangement in which the interlocking coupling with the seat 12 of the body 8 is provided.

The operation of the welding apparatus according to the invention is as follows.

As noted, for the execution of the actual welding activity, the apparatus 1 can be used in per se traditional manners, by arranging the parts to be welded (metal plates, for example) between the electrodes 3a, 3b and keeping the latter pressed against the former, while electric current flows through them.

The device 6 offers the possibility to space temporarily the electrodes 3a, 3b, or in any case to move the first one (and its supporting arm 7 with it) with respect to the designated arrangement for welding, in order to allow the user to reach regions that otherwise would be inaccessible due to the space occupations and geometries of the components involved. In fact, as shown, the device 6 allows to release the arm 7 that supports the first electrode 3a, in order to make it rotate even by just a few degrees, which are in any case sufficient to increase/modify the distance between the electrodes 3a, 3b and indeed facilitate a repositioning of the apparatus 1.

The simple and quick methods of interaction with the device 6, which do not require the use of external equipment, allow the user to perform release even in line, with minimal pauses and without forcing him to move away from the station. For example, even during the execution of a welding cycle, he can release temporarily the arm 7 to move to a part of the body of a car that otherwise would be inaccessible, to then restore the welding conditions and restart the cycle immediately.

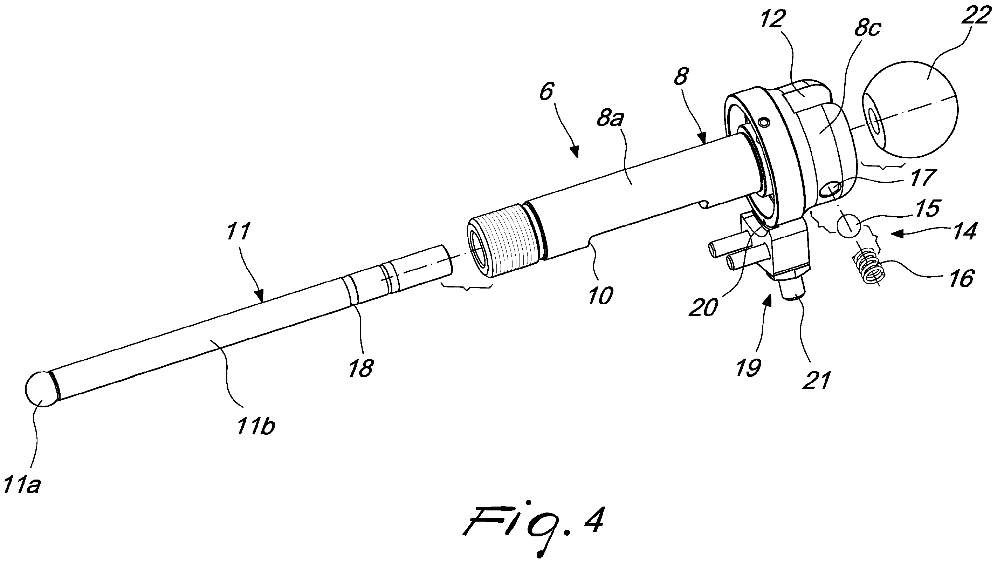

In greater detail, it has already been noted that during the welding activities, with the electrodes 3a, 3b locked and adequately mutually closer (Figure 1), the body 8 is arranged in the first angular position (Figure 3) and contrasts the rotation of the arm 7 with its axial portion 8a. The lever 11 is arranged in the first angular configuration (it is accommodated in the body 8, such as for example in Figures 4-7). Furthermore, in the first configuration the presser element 15 is kept pressed against the groove 18 in order to prevent accidental movements.

If the user wishes to release the arm 7 and move the first electrode 3a, he has to slide (extract) the lever 11 (overcoming the reaction of the spring 16 that acts on the presser element 15), moving said lever 11 from the first configuration to the second configuration. Once the second configuration has been reached, the lever 11 is almost completely extracted from the body 8 (being retained rotatably by the latter at the terminal portion 11a).

The user can then rotate the lever 11 until the predefined arrangement is reached, for example moving it from parallel (or indeed coaxial) to perpendicular with respect to the body 8, the latter being a condition in which the interlocking coupling between said lever 11 and the seat 12 provided on the body 8 is obtained (Figures 11-12, for example), thus rendering the latter temporarily integral with the lever 11.

At this point, the user has to impose a further rotation to the lever 11 (in this case, about the longitudinal axis of the body 8). Thus, the body 8 moves from the first angular position to the second angular position (Figure 10, for example), in which along the rotation trajectory of the arm 7 there is the empty space formed by the window 10 and no longer the mass of the axial portion 8a.

The user can then grip the arm 7 and move it as desired. Optionally, as a function of the position of the window 10 with respect to the arm 7, during rotation the latter can turn the body 8.

As shown, the various steps cited above, which involve the movement of the lever 11, can be performed by gripping the knob 22.

Of course, by performing the operations above listed in reverse it is then possible to restore the welding conditions and continue the desired processing.

It should be noted, therefore, that the small number of operations described above, required for release, can be performed by the user (and only by him) in a few seconds, in practice by acting exclusively on the lever 11 (the knob 22, for example), i.e., on a component of the apparatus 1 (accommodated in the duct 13 during use).

The apparatus 1 according to the invention therefore offers methods for the temporary release of an arm 7 thereof which are practical and at the same time safe by resorting to a device 6 which does not require external tools.

The means 14 for contrasting accidental movement avoid the danger of involuntary actuation, while the signaling device 19 offers the user the certainty of identifying precisely the moment when, during the rotation of the body 8, the second angular position is actually reached.

It is useful to point out that in the first configuration (which is maintained during the execution of the weld) the lever 11 is completely contained in the body 8 and in the duct 13 in particular (protruding at the most exclusively with the knob 22), with the body 8 which in turn can be fully inserted (is rotatable) in the unit 2, without causing any increase in space occupation with respect to the latter.

During welding operations, therefore, the device 6 does not hinder in any way the welding operations, requiring in fact a very small space occupation and being substantially hidden from the user (so as to not create any hindrance to him). Finally, it has also been observed that the choice to arrange the lever 11 inside a duct 13 which is eccentric (and not coaxial) with respect to the body 8 can ensure greater rigidity and mechanical strength in particular in the portion 8a.

The invention thus conceived is susceptible of numerous modifications and variations, all of which are within the scope of the appended claims.

In practice, the materials used, as well as the dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A welding apparatus, comprising a main unit (2) which supports, optionally indirectly, a first electrode (3a) and a second electrode (3b) which can be crossed by an electric current in order to perform welding treatments, a device (6) for the temporary release of a supporting arm (7) of said first electrode (3a) being associated with said unit (2) and being selectively activatable to temporarily allow the movement of said arm (7), **characterized in that** said device (6) comprises a hollow axially symmetrical body (8), which is supported by said unit (2) with the possibility of axial rotation at least between a first angular position, in which, with at least one axial portion (8a) thereof, it is arranged so as to interfere with the rotation of said arm (7), and a second angular position, in which a window (10) provided along the lateral surface of said at least one portion (8a) is arranged along the rotational trajectory of said arm (7), in order to allow the movement of said arm (7), said device (6) comprising a lever (11) for the actuation of said body (8), which can slide at least between a first configuration, in which it is accommodated in a parallel manner in said body (8), and a second configuration, in which it protrudes from said body (8) and a terminal portion (11a) of said lever (11) is retained rotatably by said body (8), said body (8) having a seat (12) which is configured for interlocking coupling with said lever (11), arranged in said second configuration and rotated, about said terminal portion (11a) and with respect to the condition of parallel arrangement with said body (8), up to a predefined arrangement, for the actuation of the rotation of said body (8) between said angular positions by means of the movement of said lever (11), said lever (11) comprising a substantially cylindrical main stem (11b) which supports at one of its ends said terminal portion (11a), said terminal portion (11a) being shaped like a sphere with a diameter that is larger than the diameter of the transverse cross-section of said stem (11b) and the diameter of an opening (8b), which is provided along said body (8) and is crossed by said lever (11) in its sliding between said configurations.

2. The welding apparatus according to claim 1, **characterized in that** said seat (12) is formed at a protruding top of said body (8) that is directed outward and is constituted by a radial groove the width of which substantially corresponds to the diameter of said lever (11), for interlocking coupling with said lever (11) in said predefined arrangement, which corresponds to a condition of perpendicularity between said lever (11) and said body (8).

3. The welding apparatus according to one of the preceding claims, **characterized in that** said body (8) is substantially shaped like a right circular cylinder, provided with an expanded head (8c) at a protruding top, said window (10) being ideally delimited by two generatrices of said cylinder and by two longitudinally aligned arcs which are chosen with a breadth preferably less than 180°.

4. The welding apparatus according to one of the preceding claims, **characterized in that** in said first configuration said lever (11) is accommodated so that it can slide in a longitudinal duct (13) provided within said body (8), said duct (13) being chosen between coaxial and eccentric with respect to said body (8).

5. The welding apparatus according to one of the preceding claims, **characterized in that** it comprises means (14) for contrasting an accidental movement of said lever (11), in order to maintain said first configuration and/or said second configuration until the direct intervention of a user occurs.

6. The welding apparatus according to claim 5, **characterized in that** said means (14) comprise a preferably spherical presser element (15), and a spring (16), which are accommodated in a radial channel (17) which is provided in said body (8) and faces said duct (13), in said first configuration and/or in said second configuration said presser element (15) being kept pressed elastically against said lever (11) by the constraining reaction of said spring (16).

7. The welding apparatus according to claim 6, **characterized in that** said lever (11) has, along its lateral surface, a circumferential groove (18), which is aligned with said channel (17) in said first configuration, said presser element (15) being pressed against said groove (18) in said first configuration in order to contrast the accidental movement of said lever (11).

8. The welding apparatus according to one of the preceding claims, **characterized in that** it comprises a signaling device (19), which can be activated automatically during the rotation of said body (8) with respect to said main unit (2) upon reaching said second angular position.

9. The welding apparatus according to claim 8, **characterized in that** said device (19) comprises a sensor which is anchored to said unit (2) and is configured to detect its own alignment with a notch (20) arranged along the lateral surface of said body (8), the condition of alignment between said notch (20) and said sensor being chosen so as to correspond to the reaching of said second angular position on the part of said body (8).

10. The welding apparatus according to claim 9, **characterized in that** said sensor comprises a spring-loaded lance (21), which is normally kept pressed elastically against said lateral surface of said body (8) and can move automatically upon alignment with said notch (20).

## Patentansprüche

1. Eine Schweißvorrichtung, die eine Haupteinheit (2) umfasst, welche, optional indirekt, eine erste Elektrode (3a) und eine zweite Elektrode (3b) trägt, die zur Durchführung von Schweißbehandlungen von einem elektrischen Strom durchquert werden können, wobei eine Vorrichtung (6) zum vorübergehenden Lösen eines Tragarms (7) der ersten Elektrode (3a) mit der Einheit (2) verbunden und wahlweise aktivierbar ist, um zeitweise die Bewegung des Arms (7) zu ermöglichen,
**dadurch gekennzeichnet, dass** die Vorrichtung (6) einen hohlen, axialsymmetrischen Körper (8) umfasst, der von der Einheit (2) getragen ist mit der Möglichkeit axialer Drehung zumindest zwischen einer ersten Winkelposition, in welcher, mit mindestens einem axialen Abschnitt (8a) desselben, er angeordnet ist, um die Drehung des Arms (7) zu behindern, und einer zweiten Winkelposition, in welcher ein Fenster (10), das entlang der Seitenfläche des mindestens einen Abschnitts (8a) angebracht ist, entlang der Rotationstrajektorie des Arms (7) angeordnet ist, um die Bewegung des Arms (7) zu ermöglichen; wobei die Vorrichtung (6) einen Hebel (11) zur Betätigung des Körpers (8) umfasst, der mindestens zwischen einer ersten Konfiguration, in der er parallel in den Körper (8) aufgenommen ist, und einer zweiten Konfiguration gleiten kann, in welcher er aus dem Körper (8) herausragt und ein Endabschnitt (11a) des Hebels (11) drehbar von dem Körper (8) gehalten ist; wobei der Körper (8) einen Sitz (12) hat, der zur Verriegelungskopplung mit dem Hebel (11) konfiguriert ist, angeordnet in der zweiten Konfiguration und gedreht, um den Endabschnitt (11a) und mit Bezug auf den Zustand paralleler Anordnung mit dem Körper (8), bis zu einer vordefinierten Anordnung, zur Betätigung der Drehung des Körpers (8) zwischen den Winkelpositionen mit Hilfe der Bewegung des Hebels (11), wobei der Hebel (11) einen im Wesentlichen zylindrischen Hauptschaft (11b) umfasst, der an einem seiner Enden den Endabschnitt (11a) trägt, wobei der Endabschnitt (11a) wie eine Kugel mit einem Durchmesser geformt ist, welcher größer ist als der Durchmesser des transversalen Querschnitts des Schafts (11b) und der Durchmesser einer Öffnung (8b), welche entlang dem Körper (8) angebracht ist und von dem Hebel (11) in seinem Gleiten zwischen den Konfigurationen durchquert wird.

2. Die Schweißvorrichtung gemäß Anspruch 1, **dadurch gekennzeichnet, dass** der Sitz (12) an einem vorstehenden oberen Ende des Körpers (8) geformt ist, das nach außen gerichtet ist und aus einer Ringnut besteht, deren Breite im Wesentlichen dem Durchmesser des Hebels (11) entspricht, zur Verriegelungskopplung mit dem Hebel (11) in der vordefinierten Anordnung, die einem Zustand lotrechter Stellung zwischen dem Hebel (11) und dem Körper (8) entspricht.

3. Die Schweißvorrichtung gemäß einem der obigen Ansprüche, **dadurch gekennzeichnet, dass** der Körper (8) im Wesentlichen wie ein gerader Kreiszylinder geformt ist, ausgestattet mit einem verbreiterten Kopf (8c) an einem vorstehenden oberen Ende, wobei das Fenster (10) idealerweise durch zwei Erzeugende des Zylinders und durch zwei in Längsrichtung ausgerichtete Bögen begrenzt ist, die mit einer Breite von vorzugsweise weniger als 180° gewählt sind.

4. Die Schweißvorrichtung gemäß einem der obigen Ansprüche, **dadurch gekennzeichnet, dass** in der ersten Konfiguration der Hebel (11) verschiebbar in einer länglichen Passage (13) aufgenommen ist, die in dem Körper (8) bereitgestellt ist, wobei die Passage (13) zwischen koaxial und exzentrisch mit Bezug auf den Körper (8) ausgewählt ist.

5. Die Schweißvorrichtung gemäß einem der obigen Ansprüche, **dadurch gekennzeichnet, dass** sie Mittel (14) zum Entgegenwirken gegen eine zufällige Bewegung des Hebels (11) umfasst, um die erste Konfiguration und/oder die zweite Konfiguration beizubehalten, bis der direkte Eingriff durch einen Benutzer stattfindet.

6. Die Schweißvorrichtung gemäß Anspruch 5, **dadurch gekennzeichnet, dass** die Mittel (14) ein vorzugsweise kugelförmiges Presselement (15) und eine Feder (16) umfassen, die in einem radialen Kanal (17) untergebracht sind, welcher in dem Körper (8) bereitgestellt und der Passage (13) zugewandt ist; wobei das Presselement (15) in der ersten Konfiguration und/oder in der zweiten Konfiguration durch die einzwängende Reaktion der Feder (16) elastisch gegen den Hebel (11) gepresst gehalten wird.

7. Die Schweißvorrichtung gemäß Anspruch 6, **dadurch gekennzeichnet, dass** der Hebel (11) entlang seiner Seitenfläche eine Umfangsnut (18) hat, die in der ersten Konfiguration mit dem Kanal (17) ausgerichtet ist, wobei das Presselement (15) in der ersten Konfiguration gegen die Nut (18) gepresst wird, um der zufälligen Bewegung des Hebels (11) entgegenzuwirken.

8. Die Schweißvorrichtung gemäß einem der obigen Ansprüche, **dadurch gekennzeichnet, dass** sie eine Signalvorrichtung (19) umfasst, die während der Drehung des Körpers (8) mit Bezug auf die Haupteinheit (2) beim Erreichen der zweiten Winkelposition automatisch aktiviert werden kann.

9. Die Schweißvorrichtung gemäß Anspruch 8, **dadurch gekennzeichnet, dass** die Vorrichtung (19) einen Sensor umfasst, der an der Einheit (2) verankert und konfiguriert ist, um seine eigene Ausrichtung mit einer Kerbe (20) zu erfassen, die entlang der Seitenfläche des Körpers (8) angeordnet ist, wobei der Zustand der Ausrichtung zwischen der Kerbe (20) und dem Sensor gewählt ist, um dem Erreichen der zweiten Winkelposition durch den Körper (8) zu entsprechen.

10. Die Schweißvorrichtung gemäß Anspruch 9, **dadurch gekennzeichnet, dass** der Sensor eine federbelastete Lanze (21) umfasst, die normalerweise elastisch gegen die Seitenfläche des Körpers (8) gepresst gehalten ist und sich bei Ausrichtung mit der Kerbe (20) automatisch bewegen kann.

## Revendications

1. Appareil de soudage, comprenant une unité principale (2) qui supporte, facultativement indirectement, une première électrode (3a) et une seconde électrode (3b) qui peuvent être traversées par un courant électrique afin de réaliser des traitements de soudure, un dispositif (6) pour la libération temporaire d'un bras de support (7) de ladite première électrode (3a) qui est associée à ladite unité (2) et pouvant être activée pour permettre temporairement le mouvement dudit bras (7), **caractérisé en ce que** ledit dispositif (6) comprend un corps axialement symétrique (8) creux, qui est supporté par ladite unité (2) avec la possibilité de rotation axiale au moins entre une première position angulaire, dans laquelle, avec au moins sa partie axiale (8a), il est agencé pour interférer avec la rotation dudit bras (7), et une seconde position angulaire, dans laquelle une fenêtre (10) prévue le long de la surface latérale de ladite au moins une partie (8a), est agencée le long de la trajectoire de rotation dudit bras (7), afin de permettre le mouvement dudit bras (7), ledit dispositif (6) comprenant un levier (11) pour l'actionnement dudit corps (8), qui peut coulisser au moins entre une première configuration, dans laquelle il est logé d'une manière parallèle dans ledit corps (8) et une seconde configuration, dans laquelle il fait saillie dudit corps (8) et une partie terminale (11a) dudit levier (11) est retenue en rotation par ledit corps (8), ledit corps (8) ayant un siège (12) qui est configuré pour le couplage par verrouillage avec ledit levier (11), agencé dans ladite seconde configuration et entraîné en rotation, autour de ladite partie terminale (11a) et par rapport à la condition d'agencement parallèle avec ledit corps (8) jusqu'à un agencement prédéfini, pour l'actionnement de la rotation dudit corps (8) entre lesdites positions angulaires au moyen du déplacement dudit levier (11), ledit levier (11) comprenant une tige principale (11b) sensiblement cylindrique qui supporte, au niveau de l'une de ses extrémités, ladite partie terminale (11a), ladite partie terminale (11a) étant formée comme une sphère avec un diamètre qui est supérieur au diamètre de la section transversale de ladite tige (11b) et le diamètre d'une ouverture (8b), qui est prévue le long dudit corps (8) et est traversée par ledit levier (11) dans son coulissement entre lesdites configurations.

2. Appareil de soudage selon la revendication 1, **caractérisé en ce que** ledit siège (12) est formé au niveau d'un sommet en saillie dudit corps (8) qui est dirigé vers l'extérieur et est constitué par une rainure radiale, dont la largeur correspond sensiblement au diamètre dudit levier (11), pour se coupler, par verrouillage, avec ledit levier (11) dans ledit agencement prédéfini, qui correspond à une condition de perpendicularité entre ledit levier (11) et ledit corps (8).

3. Appareil de soudage selon l'une des revendications précédentes, **caractérisé en ce que** ledit corps (8) est sensiblement formé comme un cylindre circulaire droit, prévu avec une tête (8c) expansée au niveau d'un sommet en saillie, ladite fenêtre (10) étant idéalement délimitée par deux génératrices dudit cylindre et par deux arcs longitudinalement alignés qui sont choisis avec une largeur de préférence inférieure à 180°.

4. Appareil de soudage selon l'une des revendications précédentes, **caractérisé en ce que** dans ladite première configuration, ledit levier (11) est logé de sorte qu'il peut coulisser dans un conduit longitudinal (13) prévu à l'intérieur dudit corps (8), ledit conduit (13) étant choisi entre coaxial et excentrique par rapport audit corps (8).

5. Appareil de soudage selon l'une des revendications précédentes, **caractérisé en ce qu'**il comprend des moyens (14) pour contraster un mouvement accidentel dudit levier (11), afin de maintenir ladite première configuration et/ou ladite seconde configuration jusqu'à ce que l'intervention directe d'un utilisateur ait lieu.

6. Appareil de soudage selon la revendication 5, **caractérisé en ce que** lesdits moyens (14) comprennent un élément presseur (15) de préférence sphérique et un ressort (16), qui sont logés dans un canal radial (17) qui est prévu dans ledit corps (8) et fait face audit conduit (13), dans ladite première configuration et/ou dans ladite seconde configuration, ledit élément presseur (15) étant élastiquement maintenu en pression contre ledit levier (11) par la réaction de contrainte dudit ressort (16).

7. Appareil de soudage selon la revendication 6, **caractérisé en ce que** ledit levier (11) a, le long de sa surface latérale, une rainure circonférentielle (18), qui est alignée avec ledit canal (17) dans ladite première configuration, ledit élément presseur (15) étant pressé contre ladite rainure (18) dans ladite première configuration afin de contraster le mouvement accidentel dudit levier (11).

8. Appareil de soudage selon l'une des revendications précédentes, **caractérisé en ce qu'**il comprend un dispositif de signalement (19), qui peut être activé automatiquement pendant la rotation dudit corps (8) par rapport à ladite unité principale (2) après avoir atteint ladite seconde position angulaire.

9. Appareil de soudage selon la revendication 8, **caractérisé en ce que** ledit dispositif (19) comprend un capteur qui est ancré à ladite unité (2) et est configuré pour détecter son propre alignement avec une encoche (20) agencée le long de la surface latérale dudit corps (8), la condition d'alignement entre ladite encoche (20) et ledit capteur étant choisie afin de correspondre à l'atteinte de ladite seconde position angulaire sur la partie dudit corps (8).

10. Appareil de soudage selon la revendication 9, **caractérisé en ce que** ledit capteur comprend une lance à ressort (21), qui est normalement maintenue élastiquement pressée contre ladite surface latérale dudit corps (8) et peut se déplacer automatiquement suite à l'alignement avec ladite encoche (20).
